# EUROPÄISCHE PATENTSCHRIFT

(11) **EP 2 655 859 B1**
(45) Veröffentlichungstag und Bekanntmachung des Hinweises auf die Patenterteilung: **28.02.2018**
(21) Anmeldenummer: 11794169.0
(22) Anmeldetag: 12.12.2011
(51) Int. Cl.: F02N 11/08, H02J 7/14, B60R 16/03

(54) **BORDNETZ FÜR EIN FAHRZEUG**
ON-BOARD SYSTEM FOR A VEHICLE
RÉSEAU DE BORD POUR UN VÉHICULE

(30) Priorität: 20.12.2010 DE 102010063598
(43) Veröffentlichungstag der Anmeldung: 30.10.2013
(60) Teilanmeldung: 17156372.9
(73) Patentinhaber: Continental Automotive GmbH, 30165 Hannover (DE)
(72) Erfinder: REICHOW, Dirk, 93173 Wenzenbach (DE); STECKERMEIER, Tobias, 93186 Pettendorf (DE); GALLI, Tobias, 93426 Roding (DE)
(86) Internationale Anmeldenummer: PCT/EP2011/072414
(87) Internationale Veröffentlichungsnummer: WO 2012/084565

(56) Entgegenhaltungen:
- EP-A1- 2 154 359
- DE-A1- 10 305 357
- DE-A1-102005 039 362
- DE-A1-102006 037 699

## Beschreibung

Die Erfindung betrifft ein Bordnetz für ein Fahrzeug. Ferner betrifft die Erfindung ein Fahrzeug, insb. ein Kraftfahrzeug mit einem oben genannten Bordnetz.

Bordnetze heutiger Kraftfahrzeuge umfassen einen als Drehstrommaschine mit nachgeschalteter Gleichrichterschaltung ausgebildeten Generator als Energiewandler, eine oder mehrere Energiespeichereinheiten, bspw. Batterien sowie über das Bordnetz zu versorgende elektrische Verbraucher, welche zusammengefasst Systemlast genannt werden. Die Drehstrommaschine, eine oder mehrere Energiespeichereinheiten, sowie die elektrischen Verbraucher werden zusammengefasst als erstes Energiesystem bezeichnet.

Ferner umfassen die Bordnetze weitere Energiespeichereinheiten, wie z. B. Doppelschichtkondensatoren, welche zusammengefasst zweites Energiesystem bezeichnet werden.

Die zwei Energiesysteme weisen unterschiedliche Nominalspannungen als Systemspannungen auf und sind zueinander potentialgetrennt aber auch potentialgebunden ausgeführt.

Das erste Energiesystem mit bspw. einer oder mehreren 12V-Batterien als Energiespeicher dient als Energie- bzw. Stromquelle für die Normalverbraucher des Kraftfahrzeugs wie z. B. Lampen.

Das zweite Energiesystem, bspw. bestehend aus Doppelschichtkondensatoren (Ultra-Caps) dient als Energie- bzw. Stromquelle für die für Hochstromverbraucher wie z. B. Motorstarter.

Die Steuerung des Stromflusses zwischen diesen beiden Energiesystemen wird von einer Vorrichtung bewirkt, wobei diese Vorrichtung von einem Energiespeicher also Stromquelle eines der beiden Energiesysteme (in der Regel von der 12V-Batterie des ersten Energiesystems) mit einer Betriebsspannung versorgt wird.

Die Druckschrift DE 103 05 357 A1 beschreibt ein Bordnetz eines Fahrzeugs mit einem Stromverbraucher, einem ersten und einem zweiten Energiespeicher, wobei der Stromverbraucher über einen ersten und einen zweiten Schalter wahlweise mit dem ersten oder dem zweiten Energiespeicher elektrisch verbindbar und somit von einem der beiden Energiespeicher wahlweise mit Strom versorgbar ausgeführt ist.

Die Druckschrift DE 10 2005 039362 A1 beschreibt ein Fahrzeug-Energieversorgungssystem mit einem ersten und einem zweiten steuerbaren Schalter sowie einem Systemsteuer, wobei der Systemsteuer den ersten und den zweiten Schalter abhängig von dem Zustand des Energieversorgungssystems gesteuert schließt oder öffnet.

In einem Bordnetz ist es sehr wichtig, einen weitgehend sicheren Systemzustand (Safe-State) in einem nominalen aber auch in einem nicht nominalen Betriebsfall des Bordnetzes zu erhalten.

Eine der Anforderungen bei der Einhaltung eines sicheren Systemzustandes beim Eintreten eines Systemfehlers im Bordnetz, insb. im ersten Energiesystem, welcher zu einem drastischen Spannungsabfall im ersten und/oder im zweiten Energiesystem führt, ist das Halten des elektrisch geschlossenen Strompfads im ersten Energiesystem, um eine unerwünschte parasitäre Strominjektion von dem ersten Energiesystem zum zweiten Energiesystem zu vermeiden, welche (die unerwünschte parasitäre Strominjektion) einerseits zu einem unkontrollierten Überladen des Energiespeichers des zweiten Energiesystems und andererseits zum Überhitzen der im Strompfad vom ersten Energiesystem zum zweiten Energiesystem befindlichen elektronischen Komponenten führt.

Die Aufgabe der vorliegenden Erfindung liegt somit darin, das eingangs genannte Bordnetz bzw. die eingangs genannte Vorrichtung zur Steuerung des Stromflusses in einem Bordnetz so zu verbessern, dass die oben genannten Nachteile vermieden werden.

Diese Aufgabe wird durch den unabhängigen Anspruch gelöst. Vorteilhafte Ausgestaltungen sind Gegenstand der Unteransprüche.

Gemäß einem ersten Aspekt der Erfindung wird ein Bordnetz geschaffen, welches einen ersten und einen zweiten Strompfad umfasst. Der erste Strompfad umfasst zumindest einen Stromverbraucher, einen ersten Energiespeicher, und einen ersten mittels einer ersten Steuerspannung steuerbaren selbstsperrenden Schalter, wobei der Stromverbraucher in einem geschlossenen Zustand des ersten Schalters mit dem ersten Energiespeicher elektrisch verbindbar und in einem geöffneten Zustand des ersten Schalters von dem Energiespeicher elektrisch trennbar ist.

Damit dient der erste Schalter dazu, im geschlossenen Zustand einen Stromfluss im ersten Energiesystem bzw. vom ersten Energiespeicher zu den Stromverbrauchern im Bordnetz herzustellen bzw. im geöffneten Zustand diesen Stromfluss zu unterbinden.

"Selbstsperrender Schalter" bedeutet, dass der Schalter beim Anliegen einer Steuerspannung mit ausreichend hohem Spannungspegel am Ansteueranschluss des Schalters schließt bzw. im geschlossenen Zustand hält und so einen Stromfluss zwischen den beiden Schalteranschlüssen ermöglicht; und beim Wegfall der Steuerspannung bzw. beim Abfall der Steuerspannung unter den zum Halten des Schalters im geschlossenen Zustand minimal erforderlichen Spannungspegel automatisch öffnet und den Stromfluss unterbricht.

Der erste Schalter weist vorteilhafterweise einen Steueranschluss auf, an dem die Steuerspannung zum Schließen bzw. Öffnen des ersten Schalters angelegt wird.

Der zweite Strompfad umfasst zumindest den einen oben genannten Stromverbraucher, den ersten und einen zweiten Energiespeicher sowie einen zweiten mittels einer zweiten Steuerspannung steuerbaren Schalter, wobei der Stromverbraucher in einem geschlossenen Zustand des zweiten Schalters mit dem ersten und dem zweiten Energiespeicher elektrisch verbindbar und in einem geöffneten Zustand des zweiten Schalters von dem ersten und dem zweiten Energiespeicher elektrisch trennbar ist.

Damit dient der zweite Schalter dazu, im geschlossenen Zustand einen Stromfluss vom zweiten Energiesystem zum ersten Energiesystem bzw. vom zweiten Energiespeicher im zweiten Energiesystem zu dem zumindest einen Stromverbraucher im Bordnetz herzustellen bzw. im geöffneten Zustand diesen Stromfluss unterbinden.

Der Stromfluss zwischen diesen beiden Energiesystemen bzw. in den beiden Energiesystemen wird somit durch diese zwei Schalter gesteuert, wobei der erste Schalter den Stromfluss im ersten Strompfad im ersten Energiesystem bzw. vom ersten Energiespeicher zu dem zumindest einem Stromverbraucher im Bordnetz steuert und der zweite Schalter den Stromfluss im zweiten Strompfad vom zweiten Energiesystem zum ersten Energiesystem bzw. vom zweiten Energiespeicher zu den Stromverbrauchern steuert.

In einem nominalen fehlerfreien Systemzustand im Bordnetz werden die Stromverbraucher im Bordnetz von dem Generator und dem ersten Energiespeicher des ersten Energiesystems mit Strom versorgt. In diesem nominalen Zustand können der Generator und der erste Energiespeicher eine stabile Netzspannung weitgehend aufrecht halten.

In diesem Zustand liegt die Systemspannung des ersten Energiesystems über einer zur Versorgung der Systemlast minimal erforderliche Nominalspannung. In diesem nominalen fehlerfreien Systemzustand ist der erste Schalter geschlossen und stellt einen Stromfluss im ersten Strompfad her. Der zweite Schalter ist dagegen geöffnet (bzw. geöffnet) und verhindert so einen Stromfluss vom zweiten Energiesystem zum ersten Energiesystem bzw. vom zweiten Energiespeicher zum Stromverbraucher bzw. zum ersten Energiespeicher.

In einem nicht nominalen jedoch weiterhin fehlerfreien Systemzustand im Bordnetz, wobei der Stromverbrauch der Systemlast durch Schließen eines oder mehrerer Hochstromverbraucher wie z. B. Motorstarter kurzfristig stark ansteigt, können der Generator und der erste Energiespeicher allein eine stabile Netzspannung nicht mehr weiter aufrecht erhalten, und es droht somit die Systemspannung des ersten Energiesystems bzw. die Netzspannung des Bordnetzes unter die Nominalspannung abzufallen. In diesem nicht nominalen aber fehlerfreien Systemzustand wird der erste Schalter geöffnet und unterbricht den Stromfluss im ersten Strompfad. Der zweite Schalter wird dagegen geschlossen und verbindet so das zweite Energiesystem mit dem ersten Energiesystem bzw. den zweiten Energiespeicher mit dem ersten Energiespeicher und stellt somit einen Stromfluss im zweiten Strompfad vom ersten Energiespeicher zum zweiten Energiespeicher bis hin zu den Stromverbrauchern her.

Ferner umfasst das Bordnetz eine Steuereinrichtung zum Schließen des ersten Schalters bzw. zum Halten des ersten Schalters im geschlossenen Zustand, wenn die von dem den ersten Schalter mit der Steuerspannung versorgenden Energiespeicher bereitgestellte Spannung unter einen vorbestimmten zum Schließen bzw. zum Halten des ersten Schalters im geschlossenen Zustand minimal erforderlichen Spannungsschwellwert fällt.

Vorzugsweise wird hierzu eine Notstromquelle bzw. Notspannungsquelle zum Bereitstellen der zum Schließen des ersten Schalters bzw. zum Halten des ersten Schalters im geschlossenen Zustand erforderlichen Not-Steuerspannung vorgesehen.

Die Steuereinrichtung schließt den ersten Schalter mit dieser von der Notstromquelle bereitgestellten Notspannung, wenn die von dem Energiespeicher bereitgestellte Spannung unter den zum Schließen bzw. zum Halten des ersten Schalters im geschlossenen Zustand minimal erforderlichen Spannungsschwellwert fällt.

So ist ein Bordnetz geschaffen, welches beim Eintreten eines Systemfehlers im Bordnetz, insb. im ersten Energiesystem, welcher zu einem drastischen Spannungsabfall im ersten und/oder im zweiten Energiesystem führt, durch Halten des elektrisch geschlossenen Strompfad im ersten Energiesystem weiterhin einen sicheren Systemzustand halten kann.

Vorteilhafterweise werden die ersten und zweiten Energiespeicher nur dann zeitgleich mit den Stromverbrauchern elektrisch verbunden, wenn sich der erste Schalter im geöffneten Zustand und gleichzeitig der zweite Schalter im geschlossenen Zustand befinden. Dadurch wird vermieden, dass durch die gleichzeitig geschlossenen beiden Schalter ein elektrischer Kurzschluss im zweiten Strompfad entsteht, welcher zu einem Stromverlust beim zweiten Energiesystem führt.

Die Steuereinrichtung schließt bzw. hält den ersten Schalter im geschlossenen Zustand vorzugsweise nur dann mit der von der Notstromquelle bereitgestellten Notspannung, wenn sich der zweite Schalter im geöffneten Zustand befindet. Dadurch wird erreicht, dass nur die ungewünschte parasitäre Strominjektion vom ersten Energiesystem über den geöffneten zweiten Schalter zum zweiten Energiesystem durch den geschlossenen ersten Schalter zum Massenanschluss abgeleitet und unschädlich gemacht wird.

Ein gewünschter Stromfluss durch den gezielt geschlossenen zweiten Schalter soll dagegen nicht durch den ersten Schalter abgeführt werden.

Dabei schließt bzw. hält die Steuereinrichtung den ersten Schalter im geschlossenen Zustand wahlweise mit der Spannung der Notstromquelle oder mit der Spannung des ersten oder des zweiten Energiespeichers und abhängig von der Spannung der Notstromquelle und abhängig von zumindest einer der Spannungen des ersten und des zweiten Energiespeichers.

Dabei vergleicht die Steuereinrichtung die von der Notstromquelle bereitgestellte Spannung mit zumindest einer der beiden vom ersten und/oder vom zweiten Energiespeicher bereitgestellten Spannungen und schließt und hält den ersten Schalter mit der Spannung mit dem größten Spannungswert im geschlossenen Zustand.

Um die von der Notstromquelle, vom ersten und/oder vom zweiten Energiespeicher bereitgestellten Spannungen zu vergleichen, umfasst die Steuereinrichtung zumindest ein bzw. drei elektrische Ventile, welche vorzugsweise als Diode ausgebildet sind.

Das erste elektrische Ventil ist zwischen dem Steueranschluss des ersten Schalters und der Notstromquelle angeordnet und zum Steueranschluss des ersten Schalters hin elektrisch leitend und umgekehrt elektrisch sperrend ausgeführt.

Das zweite elektrische Ventil ist zwischen dem Steueranschluss des ersten Schalters und dem ersten Energiespeicher angeordnet und zum Steueranschluss des ersten Schalters hin elektrisch leitend und umgekehrt elektrisch sperrend ausgeführt.

Das dritte elektrische Ventil ist zwischen dem Steueranschluss des ersten Schalters und dem zweiten Energiespeicher angeordnet und ebenfalls zum Steueranschluss des ersten Schalters hin elektrisch leitend und umgekehrt elektrisch sperrend ausgeführt.

So ist eine Steuereinrichtung geschaffen, welche kostengünstige und einfach herstellbar ist.

Die Notstromquelle ist vorzugsweise als ein wiederaufladbarer Akkumulator ausgeführt. Das Bordnetz weist zwischen dem ersten und/oder zweiten Energiespeicher und der Notstromquelle vorzugsweise eine erste und/oder zweite Nachladeeinheit zum Aufladen der Notstromquelle mit dem Strom des ersten und/oder des zweiten Energiespeichers auf. Die Notstromquelle wird von dieser zumindest einen zwischen dem ersten und/oder zweiten Energiespeicher und der Notstromquelle angeordneten Nachladeeinheit mit dem Strom des ersten und/oder des zweiten Energiespeichers aufgeladen.

Dadurch weist die Notstromquelle eine sehr lange Lebensdauer auf und ist somit wartungsarm.

Die Steuereinrichtung weist vorteilhafterweise einen dritten steuerbaren Schalter zwischen dem Steueranschluss des ersten Schalters und dem Massepotential auf.

Ferner weist die Steuereinrichtung eine Steuereinheit eines Steuerung des dritten Schalters auf, wobei diese Steuereinheit einen aktuellen Stromwert am Strompfad vom ersten Energiespeicher zum Stromverbraucher, insb. am ersten Energiespeicher erfasst, den aktuell erfassten Stromwert mit einem vorgegebenen Sollstromwert vergleicht, und bei Überschreiten des Sollstromwertes durch den aktuell erfassten Stromwert den dritten Schalter schließt und so die Steuerspannung des ersten Schalters auf Massepotential legt.

Damit ist sichergestellt, dass der erste Schalter in einem nicht nominalen jedoch fehlerfreien Betriebsfall im Bordnetz sicher geöffnet wird, um den zweiten Energiesystem bzw. den zweiten Energiespeicher mit dem ersten Energiesystem bzw. mit dem ersten Energiespeicher bzw. den Stromverbrauchern sicher elektrisch verbinden zu können.

So ist ein Bordnetz für einen Fahrzeug geschaffen, welches beim Eintreten von Systemfehlern im Bordnetz bzw. in einem Energiespeicher, welche zu Unterbrechung des Stromflusses im ersten Strompfad führen und somit das Bordnetz zu einer Gefahrsituation mit einem unkontrollierten Stromfluss zwischen dem ersten und dem zweiten Energiesystem bringen, weiterhin den funktionierenden ersten Strompfad aufweist und somit einen unkontrollierten Stromfluss zwischen den Energiesystemen im Bordnetz vermeidet.

Im Folgenden wird die Erfindung anhand eines Ausführungsbeispiels unter Zuhilfenahme von Figuren näher erläutert. In den Figuren sind lediglich die Komponenten eines Bordnetzes darstellt, welche zur Beschreibung der Erfindung unerlässlich sind. Je nach Ausführung kann das Bordnetz weitere Komponenten aufweisen, welche hier aber zur vereinfachten Beschreibung der Erfindung nicht näher dargestellt werden. Dabei zeigen:
- Figur 1: ein Bordnetz eines Kraftfahrzeugs mit einer ersten Vorrichtung in einem Blockschaltbild,
- Figur 2: die Steuereinrichtung der ersten Vorrichtung in einem Blockschaltbild, und
- Figur 3: ein Bordnetz eines Kraftfahrzeugs mit einer zweiten Vorrichtung in einem Blockschaltbild,
- Figur 4: die Steuereinrichtung der zweiten Vorrichtung in einem Blockschaltbild, und
- Figur 5: die Nachladeeinrichtung der Notstromquelle der zweiten Vorrichtung in einem Blockschaltbild detailiert dargestellt.

Gemäß den Figuren umfasst ein Bordnetz eines Kraftfahrzeugs ein erstes und ein zweites Energiesystem Esys1, Esys2, sowie eine im negativen Strompfad des Bordnetzes angeordnete Vorrichtung V. Die Energiesysteme Esys1, Esys2 in diesem beispielhaften Bordnetz sind voneinander nicht potential getrennt, also sind zueinander potentialgebunden.

Die Vorrichtung V kann aber auch in einem Bordnetz mit voneinander potential getrennten Energiesystemen Esys1, Esys2 angeordnet werden. Ebenso kann die Vorrichtung V nicht nur im negativen Strompfad des Bordnetzes, sondern auch im positiven Strompfad des Bordnetzes angeordnet werden.
Das erste Energiesystem Esys1 umfasst einen Generator G, einen Energiespeicher ES1 und eine Gruppe von Stromverbrauchern wie z. B Lampen oder Motorstarter, welche zusammengefasst Systemlast LA genannt werden.
Der vorzugsweise als Drehstrommaschine mit nachgeschalteter Gleichrichterschaltung ausgebildete Generator G dient als Energiewandler zum Umwandeln der kinetischen Energie vom Fahrzeug in die elektrische Energie und zugleich als Energiequelle zum Versorgen der Systemlast LA mit der elektrischen Energie.
Der Energiespeicher ES1, also der erste Energiespeicher im Bordnetz, speichert die vom Generator G umgewandelte elektrische Energie und versorgt die Systemlast LA mit der gespeicherten elektrischen Energie.
Das zweite Energiesystem Esys2 des Bordnetzes umfasst einen weiteren also zweiten Energiespeicher ES2 des Bordnetzes, welcher vorzugsweise als Doppelschichtkondensator ausgebildet ist und ebenfalls zum Versorgen der Systemlast LA mit der gespeicherten elektrischen Energie dient.
Die zwei Energiesysteme Esys1, Esys2 weisen unterschiedliche Nominalspannungen Vsys1, Vsys2 als Systemspannungen auf.

Der erste Energiespeicher ES1 mit bspw. einer oder mehreren 12V-Batterien oder Li-Zellen in einer Gruppenschaltung dient als Energie- bzw. Stromquelle für die Normalverbraucher der Systemlast LA wie z. B. Lichtmaschine. Der zweite Energiespeicher ES2 dient als Energie- bzw. Stromquelle für die für Hochstromverbraucher der Systemlast LA wie z. B. Motorstarter.

Die Steuerung des Stromflusses zwischen diesen beiden Energiesystemen wird von einer Vorrichtung V bzw. V` bewirkt.

Die Vorrichtung V, V' weist eine erste Nachladeeinrichtung NL1, mit der die Vorrichtung V, V' den zweiten Energiespeicher ES2 mit der elektrischen Energie von dem ersten Energiespeicher ES1 bzw. dem Generator G auflädt. Bedarfsweise lädt die Vorrichtung V, V' auch den ersten Energiespeicher ES1 mit der elektrischen Energie vom zweiten Energiespeicher ES2 auf. Hierzu weist die Nachladeeinrichtung NL1 einen DC/DC-Wandler auf zur Umwandlung der Systemspannung Vsys1 des energiegebenden Energiesystems Esys1 in die Systemspannung Vsys2 des aktuell zu ladenden Energiespeichers Esys2, um den Energiespeicher Esys2 auf den gewünschten Ladezustand aufzuladen.

Zur Steuerung des Stromflusses von den beiden Energiespeichern ES1, ES2 zur Systemlast LA weist die Vorrichtung V, V' einen ersten und einen zweiten voneinander unabhängig steuerbaren Schalter S1, S2 auf, welche bspw. als selbstsperrende MOSFET ausgebildet sind und über eine am jeweiligen Gate-Anschluss GS angelegte Gatespannung gesteuert ein-/geöffnet werden. Die Einstellung der Gatespannung des jeweiligen Schalters S1, S2, somit die Ansteuerung des jeweiligen Schalters S1, S2 erfolgt über eine erste und eine zweite Steuereinrichtung SE1, SE1' bzw. SE2, welche ausgangsseitig mit den Gate-Anschlüssen des jeweiligen Schalters S1, S2 elektrisch verbunden sind.

Mit dem ersten Schalter S1 verbindet bzw. trennt die Vorrichtung V, V' den ersten Energiespeicher ES1 des ersten Energiesystems Esys1 mit der Systemlast LA elektrisch.

Um den ersten Energiespeicher ES1 mit der Systemlast LA elektrisch zu verbinden, schließt die Vorrichtung V, V' den ersten Schalter S1. Zur Trennung der elektrischen Verbindung zwischen dem ersten Energiespeicher ES1 und der Systemlast LA öffnet die Vorrichtung V, V' den ersten Schalter S1.

In einem nominalen Systemzustand im Bordnetz werden die Stromverbraucher LA im Bordnetz durch Schließen des ersten Schalters S1 von dem Generator G und dem ersten Energiespeicher ES1 des ersten Energiesystems Esys1 mit Strom versorgt. In diesem nominalen Zustand halten der Generator G und der erste Energiespeicher ES1 weitgehend im Bordnetz eine stabile Netzspannung aufrecht.

In einem nicht nominalen Systemzustand, wobei der Stromverbrauch durch Schließen eines oder mehrerer Hochstromverbraucher wie z. B. Motorstarter kurzfristig stark ansteigt, können der Generator G und der erste Energiespeicher ES1 allein eine stabile Netzspannung im Bordnetz nicht mehr weiter aufrecht halten.

In diesem nicht nominalen Zustand muss das zweite Energiesystem Esys2 mit dem zweiten Energiespeicher ES2 ins Bordnetz geschlossen bzw. eingespeist werden.

Dies geschieht durch bestimmtes Betätigen der beiden Schalter S1, S2 der Vorrichtung V, V'. Mit dem ersten und zweiten Schalter S1, S2 verbindet bzw. trennt die Vorrichtung das zweite Energiesystem Esys2 bzw. den zweiten Energiespeicher ES2 des zweiten Energiesystems Esys2 mit dem ersten Energiesystem Esys1 bzw. dem ersten Energiespeicher ES1 sowie der Systemlast LA des ersten Energiesystems Esys1 elektrisch.

Durch zeitgleiches Schließen des zweiten Schalters S2 und Öffnen des ersten Schalters S1 verbindet die Vorrichtung V, V` das zweite Energiesystem Esys2 bzw. den zweiten Energiespeicher ES2 des zweiten Energiesystems Esys2 mit dem ersten Energiesystem Esys1 bzw. dem ersten Energiespeicher ES1 sowie der Systemlast LA des ersten Energiesystems ES1 elektrisch und hält somit die Netzspannung im Bordnetz aufrecht.

Durch Öffnen des zweiten Schalters S2 trennt die Vorrichtung V das zweite Energiesystem Esys2 bzw. den zweiten Energiespeicher ES2 von dem ersten Energiesystem Esys1 bzw. von dem ersten Energiespeicher ES1 sowie der Systemlast LA.

Neben der ersten Nachladeeinrichtung NL1, den beiden Schaltern S1, S2 weist die Vorrichtung V, V' ferner eine Steuereinrichtung SE1, SE1' zum Steuern des ersten Schalters 1, einen wiederaufladbaren Akkumulator als Notstromquelle NQ, eine zweite Nachladeeinrichtung NL2, NL2' für die Notstromquelle NQ, eine Diagnoseeinrichtung DN zum Diagnostizieren der Funktionalität bzw. zur Überwachung des Ladezustandes der Notstromquelle NQ auf.

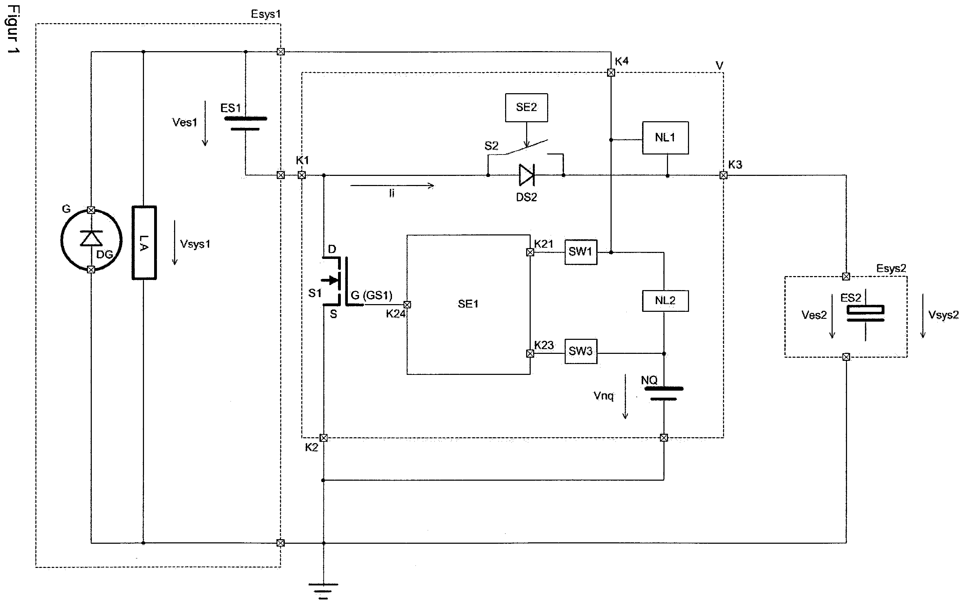

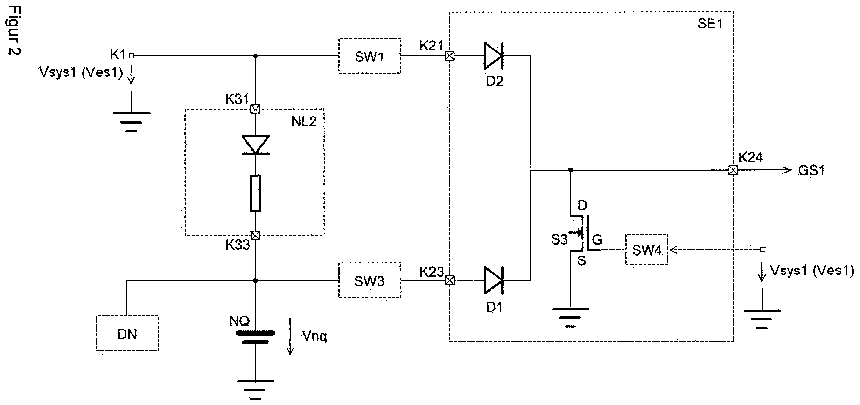

Ferner weist die Vorrichtung V des ersten Bordnetzes in den Figuren 1, 2 zwei Spannungsumwandlungseinrichtungen SW1, SW3 auf, mit denen die Vorrichtung V aus der Systemspannung Vsys1 des ersten Energiesystems Esys1 bzw. der Spannung Ves1 des ersten Energiespeichers ES1 sowie aus der Spannung Vnq der Notstromquelle NQ die Gatespannung Vgs1 zum Steuern des ersten Schalters S1 generiert.

Die zwei Spannungsumwandlungseinrichtungen SW1, SW3 können allersamt als DC/DC-Wandler gleichen Typs mit manuell und voneinander unabhängig einstellbaren Umwandlungskoeffizienten ausgebildet sein, aber auch als DC/DC-Wandler unterschiedlichen Typs mit unterschiedlichen Umwandlungskoeffizienten.

Die Steuerung des ersten MOSFET-Schalters S1 erfolgt durch die Steuereinrichtung SE1, welche als Ausgangssignal am Ausgang K24 der Einrichtung SE1 die Gatespannung Vgs1 für den Schalter S1 bereitstellt. Mit zwei Signaleingängen K21, K23 ist die Steuereinrichtung SE1 mit dem jeweiligen Ausgang der beiden Spannungsumwandlungseinrichtungen SW1, SW3 elektrisch verbunden, welche wiederum eingangsseitig mit dem jeweiligen positiven Anschluss des ersten Energiespeichers Esys1 und der Notstromquelle NQ elektrisch verbunden sind.

Die Spannungsumwandlung bei den beiden Spannungsumwandlungseinrichtungen SW1, SW3 erfolgt prozentual, also die Ausgangsspannung Ua verhält sich proportional zu der Eingangsspannung Ua, wobei die Verhältnisse der Ausgangsspannungen Ua zu den jeweiligen Eingangsspannungen Ue bei allen beiden Spannungsumwandlungseinrichtungen SW1, SW3 durch Einstellen der einstellbaren Umwandlungskoeffizienten k regelbar sind.

Die Ausgangsspannungen von den beiden Spannungsumwandlungseinrichtungen SW1, SW3 werden von der Steuereinrichtung SE1 an den Gate-Anschluss GS1 des ersten Schalters S1 weitergeleitet.

Hierzu weist die Steuereinrichtung SE1 zwei Dioden D1, D2 auf, welche mit ihrem Anode-Anschluss mit dem jeweiligen Ausgang der Spannungsumwandlungseinrichtungen SW3, SW1 und mit ihrem Kathode-Anschluss mit dem Gate-Anschluss GS1 des ersten Schalters S1 elektrisch verbunden sind, und den Strom von den Ausgängen der jeweiligen Spannungsumwandlungseinrichtungen SW3, SW1 zum Gate-Anschluss GS1 des ersten Schalters S1 hin leiten und umgekehrt sperren.

Ferner weist die Steuereinrichtung SE1 zwischen dem Knoten K24 also zwischen dem Gate-Anschluss des ersten Schalters S1 und dem Massenpotential einen dritten steuerbaren, ebenfalls als selbstsperrrender MOSFET ausgeführten Schalter S3 auf.

Der Gate-Anschluss dieses dritten Schalters S3 wird von einer zwischengeschalteten Steuereinheit SH gesteuert, wobei diese Steuereinheit SH den Stromfluss im Bordnetz (bspw. am ersten Schalter S1) überwacht und bei stark ansteigendem Stromfluss bzw. bei Überschreiten des Stromwertes im Bordnetz (bzw. am ersten Schalter S1) über einen vorgegebenen Sollstromwert den dritten Schalter S3 schließt und so die Gatespannung Vgs1 des ersten Schalters S1 auf den Massepotential legt. Solange aber der Bordnetzstrom unter den Sollstromwert liegt, hält die Steuereinheit SH den dritten Schalter S3 in einem geöffneten Zustand und die Gatespannung Vgs1 des ersten Schalters S1 auf das Spannungsniveau der Ausgangsspannung der Spannungsumwandlungseinrichtungen SW1, SW3.

In einem nominalen fehlerfreien Systemzustand im Bordnetz ist die Systemspannung Vsys1 des ersten Energiesystems ES1 bzw. die Spannung Ves1 am ersten Energiespeicher ES1 höher als oder gleich hoch wie eine für einen stabilen Systemzustand im Bordnetz erforderliche Mindestspannung (Nominalspannung).

In diesem Fall ist die Ausgangsspannung von der ersten Spannungsumwandlungseinrichtung SW1, welche unverändert von der ersten Diode D1 der Steuereinrichtung SE1 zum Gate-Anschluss GS1 weitergeleitet wird, höher als die zum Schließen des Schalters S1 erforderliche Soll-Gatespannung Vsgs1, sodass der erste Schalter S1 geschlossen wird bzw. im geschlossenen Zustand gehalten wird und den Strom vom ersten Energiespeicher ES1 zu der Systemlast LA leitet.

Da in diesem nominalen Systemzustand der Strom im Bordnetz unter den vorgegebenen Sollstromwert liegt und die Systemspannung Vsys1 des ersten Energiesystems oberhalb eines vorgegebenen Sollspannungswertes liegt, öffnet die Steuereinheit SH den dritten Schalter S3 bzw. hält den dritten Schalter S3 in einem geöffneten Zustand, sodass die Gatespannung Vgs1 des ersten Schalters S1 auf das Spannungsniveau der Ausgangsspannung der Spannungsumwandlungseinrichtung SW1 gehalten wird.

In diesem Systemzustand hält die zweite Steuereinrichtung SE2 den zweiten Schalter S2 im geöffneten Zustand.

In einem nicht-nominalen aber weiterhin fehlerfreien Systemzustand im Bordnetz steigt der Strom im ersten Energiesystem Esys1 steil an bzw. fällt die Systemspannung Vsys1 rapid ab.

Diese Veränderung des Stromes oder der Spannung wird von der Steuereinheit SH in der Steuereinrichtung SE1 erfasst. Die Steuereinheit SH setzt dann deren Ausgangsspannung auf ein zum Schließen des dritten Schalters S3 erforderliches Spannungsniveau und schließt so den dritten Schalter S3.

Demzufolge wird der Gate-Anschluss GS1 des ersten Schalters S1 auf den Massepotential gelegt. Folglich wird der erste Schalter S1 geöffnet und der Stromfluss vom ersten Energiespeicher ES1 durch diesen ersten Schalter S1 hin zur Systemlast LA unterbrochen.

Zeitgleich schließt die zweite Steuereinrichtung SE2 den zweiten Schalter S2 und verbindet so das zweite Energiesystem Esys2 bzw. den zweiten Energiespeicher ES2 mit dem ersten Energiesystem Esys1 bzw. mit dem ersten Energiespeicher ES1 und der Systemlast LA. So wird ein Strompfad vom ersten Energiespeicher ES1 über den zweiten Schalter S2 zum zweiten Energiespeicher ES2 und anschließend zur Systemlast LA hergestellt und die Netzspannung dank dem zweiten Energiespeicher ES2 auf einen zum Betreiben der Systemlast LA erforderlichen Spannungspotential gehalten.

Tritt im Bordnetz ein Systemfehler durch bspw. Verpolung des ersten Energiespeichers ES1 auf, so bricht die Systemspannung Vsys1 am ersten Energiesystem Esys1 bzw. die Spannung am ersten Energiespeicher ES1 unkontrolliert ab, ohne dabei ein Stromanstieg im Bordnetz verzeichnet wird. In diesem Fall fällt die Ausgangsspannung der ersten Spannungsumwandlungseinrichtung SW1 unter die Soll-Gatespannung Vsgs ab.

Folglich droht der erste Schalter S1 zu öffnen und der Stromfluss vom ersten Energiespeicher ES1 über diesen ersten Schalter S1 zur Systemlast LA unterbrochen zu werden.

Da jedoch kein rapid ansteigender Stromfluss erfasst wurde, schalten die zweite Steuereinrichtung SE2 und die Steuereinheit SH der ersten Steuereinrichtung SE1 den zweiten und dritten Schalter S2, S3 nicht ein.

Außerdem, weil die Steuereinheit SH von dem ersten Energiespeicher ES1 mit dem Strom versorgt wird, wird die Steuereinheit SH beim Abbrechen der Systemspannung beim ersten Energiespeicher ES1 aufgrund der fehlenden Betriebsspannung nicht mehr funktionieren. Demzufolge fällt die Steuerspannung also die Gatespannung für den dritten Schalter S3 aus und öffnet der als selbstsperrender MOSFET ausgebildete dritte Schalter S3 automatisch.

Durch den Abfall der Systemspannung Vsys1 fällt auch die Betriebsspannung an der zweiten Steuerungseinrichtung weg und somit auch die Gatespannung für den zweiten Schalter S2. Der als selbstsperrende MOSFET ausgebildete zweite Schalter S2 öffnet so automatisch. Dies ist gewünscht, damit das zweite Energiesystem Esys2 bzw. der zweite Energiespeicher ES2 nicht an das fehlerhafte Bordnetz angeschlossen wird.

Im fehlerhaften ersten Energiesystem Esys1 bspw. am Generator G entsteht jedoch eine parasitäre Strominjektion Ii, welche durch den MOSFET internen parasitären Diodenpfad DS2 des geöffneten zweiten Schalters S2 hindurch zum zweiten Energiesystem Esys2 hin unkontrolliert fließen und so einerseits zu Überhitzen des zweiten Schalters S2 und andererseits zu unkontrolliertem Überladen des zweiten Energiespeichers ES2 führen kann.

Diese Strominjektion Ii kann einfacherweise mithilfe vom Strompfad durch den geschlossenen ersten Schalter S1 zur Masse abgeführt und unschädlich gemacht werden.

Beim Ausbleiben der Spannung Ves1 in diesem fehlerhaften Systemzustand bleibt der als selbstsperrender MOSFET ausgeführte erste Schalter S1 jedoch dank der Notstromquelle NQ und dem Steuerpfad von der Notstromquelle über die zweite Diode D3 in der Steuereinrichtung SE1 hin zum Gate-Anschluss des ersten Schalters S1 weiterhin geschlossen und leitet so die parasitäre Strominjektion Ii zur Masse ab.
Dies geschieht dadurch, dass die Notstromquelle NQ unabhängig vom Systemzustand Strom liefert und dank der nachgeschalteten Spannungsumwandlungseinrichtung SW3, welche die Spannung an der Notstromquelle NQ auf eine zum Schließen des ersten Schalters S1 erforderliche Gatespannung umwandelt bzw. erhöht, der erste Schalter S1 auch beim Ausbleiben der Spannung vom ersten Energiespeicher ES1 weiterhin von der Spannung der Notstromquelle NQ gesteuert geschlossen bzw. im geschlossenen Zustand gehalten wird.
Da beim Abbrechen der Systemspannung des ersten Energiesystems ES1 bzw. der Spannung am ersten Energiespeicher ES1 keine Spannung am Gate-Anschluss des dritten Schalters S3 anliegt, öffnet der selbstsperrende dritte Schalter S3 automatisch und somit wird der Gate-Anschluss des ersten Schalters S1 auch nicht mit der Masse kurzgeschlossen.
Dadurch wird der erste Schalter S1 beim Auftreten eines Systemfehlers beim ersten Energiesystem Esys1 geschlossen bzw. in einem geschlossenen Zustand gehalten und die parasitäre Strominjektion Ii vom ersten Energiesystem Esys1 durch diesen ersten Schalter S1 zur Masse abgeführt und unschädlich gemacht.
In der Folge daraus kann ein parasitärer Lade- oder Überladevorgang vom zweiten Energiespeicher ES2 und eine Systemüberhitzung am zweiten Schalter S2 bzw. innerhalb der Vorrichtung V verhindert werden. Ferner kann das gesamte Bordnetz trotz des Systemfehlers in einem Sicherheitszustand (Safe-State) gehalten werden.

Die Notstromquelle NQ kann von dem ersten Energiesystem Esys1 bzw. von dem ersten Energiespeicher ES1 des ersten Energiesystems Esys1 in einem nominalen fehlerfreien Systemzustand mit dem Strom aufgeladen werden. Der Ladezustand der Notstromquelle NQ bzw. der Ladevorgang bei der Notstromquelle NQ kann von der Diagnoseeinrichtung DN überwacht und geregelt werden.

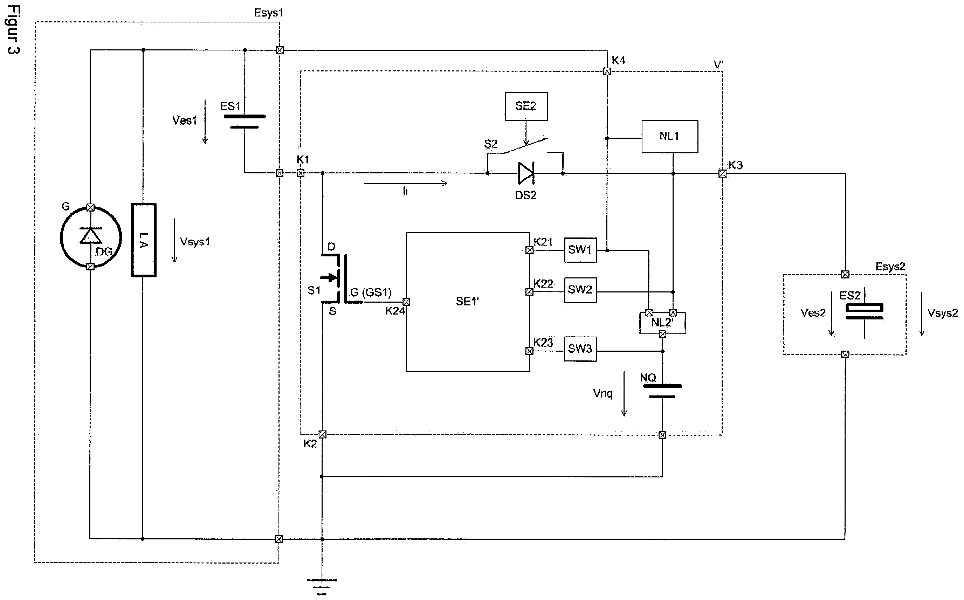

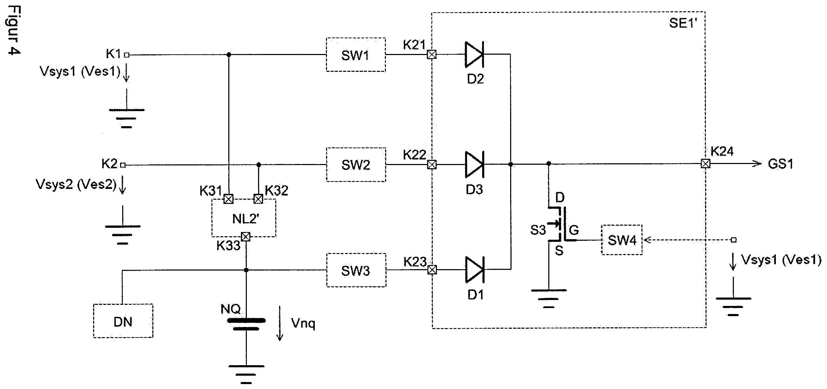

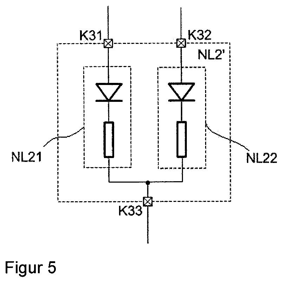

Die in den Figuren 3 bis 5 darstellte Vorrichtung V' unterscheidet sich von der in den Figuren 1 und 2 darstellten Vorrichtung V dadurch, dass der erste Schalter S1 neben der Spannung vom ersten Energiespeicher ES1 und der Spannung von der Notstromquelle NQ noch von der Spannung Vsys2 des zweiten Energiesystems Esys2 bzw. von der Spannung Ves2 des zweiten Energiespeichers ES2 gesteuert wird.

Hierzu weist die Vorrichtung V` eine weitere Spannungsumwandlungseinrichtung SW2, welche die Spannung Vsys2 des zweiten Energiesystems Esys2 bzw. die Spannung Ves2 des zweiten Energiespeichers ES2 in einer Steuerspannung umwandelt. Diese umgewandelte Steuerspannung wird von einer weiteren Diode D3 an den Gate-Anschluss GS1 des ersten Schalters S1 weitergeleitet und steuert den ersten Schalter S1 als Gatespannung Vgs1.

So ist ein redundanter Steuerpfad für den ersten Schalter S1 geschaffen, welcher im fehlerhaften Zustand beim ersten Energiesystem Esys1 neben dem Steuerpfad von der Notstromquelle NQ auch zum Schließen bzw. Halten des ersten Schalters S1 im geschlossenen Zustand dient.

Die Notstromquelle NQ kann in diesem Fall sowohl von dem ersten als auch von dem zweiten Energiespeicher ES1, ES2 mit dem Strom aufgeladen werden. Hierzu weist die Nachladeeinrichtung NL2' jeweils einen Anschluss K31, K32 zu dem jeweiligen Energiespeicher ES1, ES2 auf. Zwischen dem jeweiligen Eingangsanschluss K31, K32 und dem Ausgangsanschluss K33 weist die Nachladeeinrichtung NL2' jeweils eine Diode und einen Widerstand umfassende Nachladeeinheit auf.

### Bezugszeichenliste

- Esys1, Esys2: Erstes, zweites Energiesystem
- ES1, ES2: Erster, zweiter Energiespeicher
- V, V': Vorrichtung
- G: Generator
- DG: Parasitäre Diode im Generator
- LA: Systemlast
- S1, S2, S3: Erster, zweiter, dritter Schalter
- DS2: Parasitärer Diodenpfad im zweiten Schalter S2
- NQ: Notstromquelle
- NL1, NL2, NL2': Nachladeeinrichtung
- DN: Diagnoseeinrichtung
- SW1, SW2, SW3, SW4: Spannungsumwandlungseinrichtung
- SE1, SE2: Steuereinrichtung
- SH: Steuereinheit
- D1, D2, D3: Diode, elektrisches Ventil
- K1, K2, K3, K4: Anschluss der Vorrichtung V, V'
- K21, K22, K23, K24: Anschluss der Steuereinrichtung SE1
- K31, K32, K33: Anschluss der Nachladeeinrichtung NL2'
- GS1: Gate-Anschluss des ersten Schalters S1

## Patentansprüche

1. Bordnetz für ein Fahrzeug, mit folgenden Merkmalen:
- einem ersten Strompfad umfassend:
o zumindest einen Stromverbraucher (LA),
o einen ersten Energiespeicher (ES1), und
o einen ersten mittels einer ersten Steuerspannung steuerbaren selbstsperrenden Schalter (S1),
wobei in einem geschlossenen Zustand des ersten Schalters (S1) der zumindest eine Stromverbraucher (LA) mit dem ersten Energiespeicher (ES1) elektrisch verbindbar ist,
- einem zweiten Strompfad umfassend:
o den zumindest einen Stromverbraucher (LA),
o den ersten (ES1) und einen zweiten Energiespeicher (ES2), und
o einen zweiten mittels einer zweiten Steuerspannung steuerbaren Schalter (S2),
wobei in einem geschlossenen Zustand des zweiten Schalters (S2) der zumindest eine Stromverbraucher (LA) mit dem ersten (ES1) und dem zweiten Energiespeicher (ES2) elektrisch verbindbar ist,
- einer Steuereinrichtung (SE1) zum Schließen des ersten Schalters (S1) bzw. zum Halten des ersten Schalters (S1) im geschlossenen Zustand beim Unterschreiten eines zum Schließen bzw. zum Halten des ersten Schalters (S1) im geschlossenen Zustand minimal erforderlichen Spannungsschwellwertes durch die von dem den ersten Schalter (S1) versorgenden Energiespeicher (ES1) bereitgestellte Spannung.

2. Bordnetz nach Anspruch 1, mit einer Notstromquelle (NQ) zum Bereitstellen der zum Schließen des ersten Schalters (S1) bzw. zum Halten des ersten Schalters (S1) im geschlossenen Zustand erforderlichen Spannung, wobei die Steuereinrichtung (SE1) zum Schließen bzw. zum Halten des ersten Schalters (S1) im geschlossenen Zustand mit der von der Notstromquelle (NQ) bereitgestellten Spannung ausgeführt ist.

3. Bordnetz nach einem der vorangehenden Ansprüche, wobei der erste (ES1) und der zweite Energiespeicher (ES2) nur im geöffneten Zustand des ersten Schalters (S1) und im gleichzeitig geschlossenen Zustand des zweiten Schalters (S2) zeitgleich mit dem Stromverbraucher (LA) elektrisch verbindbar ausgeführt sind.

4. Bordnetz nach einem der vorangehenden Ansprüche, wobei die Steuereinrichtung (SE1) zum Schließen und zum Halten des ersten Schalters (S1) im geschlossenen Zustand mit der von der Notstromquelle (NQ) bereitgestellten Spannung nur im geöffneten Zustand des zweiten Schalters (S2) ausgeführt ist.

5. Bordnetz nach einem der vorangehenden Ansprüche 2 bis 4, wobei die Steuereinrichtung (SE1) zum Schließen und zum Halten des ersten Schalters (S1) im geschlossenen Zustand abhängig von der Spannung der Notstromquelle (NQ) und abhängig von zumindest einer der Spannungen des ersten (ES1) und des zweiten Energiespeichers (ES2) wahlweise mit der Spannung der Notstromquelle (NQ) oder mit der Spannung des ersten (ES1) oder des zweiten Energiespeichers (ES2) ausgeführt ist.

6. Bordnetz nach einem der vorangehenden Ansprüche, wobei
- der erste Schalter (S1) einen Steueranschluss (GS1) für die Steuerspannung aufweist, und
- die Steuereinrichtung (SE1)
∘ ein erstes, zwischen dem Steueranschluss (GS1) des ersten Schalters (S1) und der Notstromquelle (NQ) angeordnetes, zum Steueranschluss (GS1) des ersten Schalters (S1) hin leitendes und umgekehrt sperrendes, elektrisches Ventil (D1), insb. eine Diode, und/oder
∘ ein zweites, zwischen dem Steueranschluss (GS1) des ersten Schalters (S1) und dem ersten Energiespeicher (ES1) angeordnetes, zum Steueranschluss (GS1) des ersten Schalters (S1) hin leitendes und umgekehrt sperrendes, elektrisches Ventil (D2), insb. eine Diode, und/oder
∘ ein drittes, zwischen dem Steueranschluss (GS1) des ersten Schalters (S1) und dem zweiten Energiespeicher (ES2) angeordnetes, zum Steueranschluss (GS1) des ersten Schalters (S1) hin leitendes und umgekehrt sperrendes, elektrisches Ventil (D3), insb. eine Diode aufweist.

7. Bordnetz nach einem der Ansprüche 2 bis 6, wobei
- die Notstromquelle (NQ) ein wiederaufladbarer Akkumulator ist, und
- das Bordnetz zwischen dem ersten (ES1) und/oder zweiten Energiespeicher (ES2) und der Notstromquelle (NQ) eine erste (NL2, NL21) und/oder zweite Nachladeeinheit (NL22) zum Aufladen der Notstromquelle (NQ) mit dem Strom des ersten (ES1) und/oder des zweiten Energiespeichers (ES2) aufweist.

8. Bordnetz nach einem der vorangehenden Ansprüche, wobei
- die Steuereinrichtung (SE1)
∘ zwischen dem Steueranschluss (GS1) des ersten Schalters (S1) und dem Massepotential einen dritten steuerbaren Schalter (S3),
∘ eine Steuereinheit (SH) zur Steuerung des dritten Schalters (S3)
aufweist,
- wobei diese Steuereinheit (SH)
∘ zum Erfassen eins aktuellen Stromwertes am Strompfad vom ersten Energiespeicher (ES1) zum Stromverbraucher (LA), insb. am ersten Energiespeicher (ES1),
∘ zum Vergleichen des aktuell erfassten Stromwertes mit einem vorgegebenen Sollstromwert, und
∘ zum Schließen des dritten Schalters (S3) bei Überschreiten des Sollstromwertes durch den aktuell erfassten Stromwert und zum Legen der Steuerspannung des ersten Schalters (S1) auf Massepotential
ausgeführt ist.

9. Fahrzeug, insb. Kraftfahrzeug, mit einem Bordnetz nach einem der Ansprüche 1 bis 8.

## Claims

1. On-board system for a vehicle, comprising the following features:
- a first current path, comprising:
∘ at least one current consumer (LA),
∘ a first energy store (ES1), and
∘ a first self-locking switch (S1) controllable by means of a first control voltage,
wherein, in a closed state of the first switch (S1), the at least one current consumer (LA) is electrically connectable to the first energy store (ES1),
- a second current path, comprising:
∘ the at least one current consumer (LA),
∘ the first (ES1) and a second energy store (ES2), and
∘ a second switch (S2) controllable by means of a second control voltage,
wherein, in a closed state of the second switch (S2), the at least one current consumer (LA) is electrically connectable to the first (ES1) and the second energy store (ES2),
- a control arrangement (SE1) for closing the first switch (S1) or for holding the first switch (S1) in the closed state when the voltage provided by the energy store (ES1) supplying the first switch (S1) falls below a minimum voltage threshold value necessary to close the first switch (S1) or to hold the first switch (S1) in the closed state.

2. On-board system according to Claim 1, comprising an emergency power source (NQ) for providing the voltage necessary to close the first switch (S1) or to hold the first switch (S1) in the closed state, wherein the control arrangement (SE1) for closing the first switch (S1) or for holding the first switch (S1) in the closed state is embodied with the voltage provided by the emergency power source (NQ).

3. On-board system according to one of the preceding claims, wherein the first energy store (ES1) and the second energy store (ES2) are designed to be electrically connectable at the same time to the current consumer (LA) only in the open state of the first switch (S1) and in the simultaneously closed state of the second switch (S2).

4. On-board system according to one of the preceding claims, wherein the control arrangement (SE1) is designed to close the first switch (S1) and to hold the first switch (S1) in the closed state with the voltage provided by the emergency power source (NQ) only in the open state of the second switch (S2).

5. On-board system according to one of preceding Claims 2 to 4, wherein the control arrangement (SE1) is designed to close the first switch (S1) and to hold the first switch (S1) in the closed state selectively with the voltage of the emergency power source (NQ) or with the voltage of the first energy store (ES1) or of the second energy store (ES2) in a manner dependent on the voltage of the emergency power source (NQ) and dependent on at least one of the voltages of the first energy store (ES1) and of the second energy store (ES2).

6. On-board system according to one of the preceding claims, wherein
- the first switch (S1) comprises a control connection (GS1) for the control voltage, and
- the control arrangement (SE1) comprises
∘ a first electric valve (D1), in particular a diode, arranged between the control connection (GS1) of the first switch (S1) and the emergency power source (NQ), and conductive towards the control connection (GS1) of the first switch (S1) and in the opposite direction blocking, and/or
∘ a second electric valve (D2), in particular a diode, arranged between the control connection (GS1) of the first switch (S1) and the first energy store (ES1), and conductive towards the control connection (GS1) of the first switch (S1) and in the opposite direction blocking, and/or
∘ a third electric valve (D3), in particular a diode, arranged between the control connection (GS1), of the first switch (S1) and the second energy store (ES2), and conductive towards the control connection (GS1) of the first switch (S1) and in the opposite direction blocking.

7. On-board system according to one of Claims 2 to 6, wherein
- the emergency power source (NQ) is a rechargeable accumulator, and
- the on-board system comprises, between the first energy store (ES1) and/or second energy store (ES2) and the emergency power source (NQ), a first recharging unit (NL2, NL21) and/or second recharging unit (NL22) for charging the emergency power source (NQ) with the power of the first energy store (ES1) and/or of the second energy store (ES2).

8. On-board system according to one of the preceding claims, wherein
- the control arrangement (SE1) comprises
∘ a third controllable switch (S3) between the control connection (GS1) of the first switch (S1) and the ground potential,
∘ a control unit (SH) for controlling the third switch (S3),
- wherein said control unit (SH) is designed
∘ to determine an effective current value at the current path from the first energy store (ES1) to the current consumer (LA), in particular at the first energy store (ES1),
∘ to compare the effectively determined current value with a predefined target current value, and,
∘ to close the third switch (S3) if the target current value is exceeded by the effectively determined current value 2nd to connect the control voltage of the first switch (S1) to ground potential.

9. Vehicle, in particular motor vehicle, comprising an on-board system according to one of Claims 1 to 8.

## Revendications

1. Réseau de bord pour un véhicule, possédant les caractéristiques suivantes :
- un premier trajet de courant comprenant :
∘ au moins un consommateur de courant (LA),
∘ un premier accumulateur d'énergie (ES1) et
∘ un premier commutateur (S1) à autoverrouillage qui peut être commandé au moyen d'une première tension de commande,
l'au moins un consommateur de courant (LA) pouvant être relié électriquement au premier accumulateur d'énergie (ES1) dans une position fermée du premier commutateur (S1),
- un deuxième trajet de courant comprenant :
∘ l'au moins un consommateur de courant (LA),
∘ le premier (ES1) et un deuxième accumulateur d'énergie (ES2) et
∘ un deuxième commutateur (S2) qui peut être commandé au moyen d'une deuxième tension de commande,
l'au moins un consommateur de courant (LA) pouvant être relié électriquement au premier (ES1) et au deuxième accumulateur d'énergie (ES2) dans une position fermée du deuxième commutateur (S2),
- un dispositif de commande (SE1) destiné à fermer le premier commutateur (S1) ou à maintenir le premier commutateur (S1) à l'état fermé dans le cas où la tension délivrée par l'accumulateur d'énergie (ES1), alimentant le premier commutateur (S1), devient inférieure à une valeur de seuil de tension minimale nécessaire pour fermer ou pour maintenir à l'état fermé le premier commutateur (S1).

2. Réseau de bord selon la revendication 1, comprenant une source électrique de secours (NQ) destinée à délivrer la tension nécessaire pour fermer le premier commutateur (S1) ou maintenir le premier commutateur (S1) à l'état fermé, le dispositif de commande (SE1) étant réalisé pour fermer ou maintenir le premier commutateur (S1) à l'état fermé avec la tension délivrée par la source électrique de secours (NQ).

3. Réseau de bord selon l'une des revendications précédentes, le premier (ES1) et le deuxième accumulateur d'énergie (ES2) étant réalisés pour ne pouvoir être reliés électriquement au consommateur de courant (LA) que dans l'état ouvert du premier commutateur (S1) et dans l'état simultanément fermé du deuxième commutateur (S2).

4. Réseau de bord selon l'une des revendications précédentes, le dispositif de commande (SE1) étant réalisé pour fermer et pour maintenir le premier commutateur (S1) à l'état fermé avec la tension délivrée par la source électrique de secours (NQ) seulement lorsque le deuxième commutateur (S2) se trouve à l'état ouvert.

5. Réseau de bord selon l'une des revendications précédentes 2 à 4, le dispositif de commande (SE1) étant réalisé pour fermer et pour maintenir le premier commutateur (S1) à l'état fermé en fonction de la tension de la source électrique de secours (NQ) et en fonction d'au moins l'une des tensions du premier (ES1) et du deuxième accumulateur d'énergie (E2), au choix, avec la tension de la source électrique de secours (NQ), ou avec la tension du premier (ES1) et du deuxième accumulateur d'énergie (ES2).

6. Réseau de bord selon l'une des revendications précédentes, dans lequel :
- le premier commutateur (S1) possède une borne de commande (GS1) pour la tension de commande et
- le dispositif de commande (SE1) possède
∘ une première vanne électrique (D1), notamment une diode, disposée entre la borne de commande (GS1) du premier commutateur (S1) et la source électrique de secours (NQ), passante en direction de la borne de commande (GS1) du premier commutateur (S1) et bloquée en sens inverse, et/ou
∘ une deuxième vanne électrique (D2), notamment une diode, disposée entre la borne de commande (GS1) du premier commutateur (S1) et le premier accumulateur d'énergie (ES1), passante en direction de la borne de commande (GS1) du premier commutateur (S1) et bloquée en sens inverse, et/ou
∘ une troisième vanne électrique (D3), notamment une diode, disposée entre la borne de commande (GS1) du premier commutateur (S1) et le deuxième accumulateur d'énergie (ES2), passante en direction de la borne de commande (GS1) du premier commutateur (S1) et bloquée en sens inverse.

7. Réseau de bord selon l'une des revendications 2 à 6, dans lequel :
- la source électrique de secours (NQ) est un accumulateur rechargeable, et
- le réseau de bord possède, entre le premier (ES1) et/ou le deuxième accumulateur d'énergie (ES2) et la source électrique de secours (NQ) une première (NL2, NL1) et/ou une deuxième unité de recharge (NL22) destinées à charger la source électrique de secours (NQ) avec le courant du premier (ES1) et/ou du deuxième accumulateur d'énergie (ES2).

8. Réseau de bord selon l'une des revendications précédentes, dans lequel :
- le dispositif de commande (SE1)
∘ possède un troisième commutateur (S3) commandable entre la borne de commande (GS1) du premier commutateur (S1) et la borne de masse,
∘ une unité de commande (SH) servant à commander le troisième commutateur (S3),
- cette unité de commande (SH) étant réalisée
∘ pour détecter une valeur de courant actuelle au niveau du trajet de courant du premier accumulateur d'énergie (ES1) vers le consommateur de courant (LA), notamment au niveau du premier accumulateur d'énergie (ES1),
∘ pour comparer la valeur du courant actuellement détectée avec une valeur de courant de consigne prédéfinie, et
∘ pour fermer le troisième commutateur (S3) dans le cas où la valeur du courant actuellement détectée dépasse la valeur de courant de consigne et pour appliquer la tension de commande du premier commutateur (S1) à la masse.

9. Véhicule, notamment véhicule automobile équipé d'un réseau de bord selon l'une des revendications 1 à 8.
